# EUROPEAN PATENT SPECIFICATION

(11) **EP 3 085 912 B1**
(45) Date of publication and mention of the grant of the patent: **29.11.2017**
(21) Application number: 16160035.8
(22) Date of filing: 11.03.2016
(51) Int. Cl.: F01N 3/20, F01N 9/00

(54) **METHOD TO DEFROST A CONTROL FLUID IN A TANK OF AN EXHAUST SYSTEM PROVIDED WITH EXHAUST GAS AFTER-TREATMENT IN AN INTERNAL COMBUSTION ENGINE**
VERFAHREN ZUM ABTAUEN EINES KONTROLLFLUIDS IN EINEM TANK EINER ABGASANLAGE MIT ABGASNACHBEHANDLUNG IN EINEM VERBRENNUNGSMOTOR
PROCÉDÉ POUR LE DÉGIVRAGE D'UN RÉSERVOIR DE FLUIDE DANS UN SYSTÈME D'ÉCHAPPEMENT DOTÉ DE POST-TRAITEMENT DE GAZ D'ÉCHAPPEMENT DANS UN MOTEUR À COMBUSTION INTERNE

(30) Priority: 13.03.2015 IT BO20150124
(43) Date of publication of application: 26.10.2016
(73) Proprietor: Magneti Marelli S.p.A., 20011 Corbetta (MI) (IT)
(72) Inventor: OSBAT, Giovanni, 48025 RIOLO TERME (IT); DE CESARE, Matteo, 71017 TORREMAGGIORE (IT)
(74) Representative: Maccagnan, Matteo

(56) References cited:
- EP-A2- 0 116 419
- DE-A1-102009 054 735
- DE-A1-102011 118 626
- US-A1- 2010 299 052

## Description

### TECHNICAL FIELD

The present invention relates to a method to defrost a control fluid in a tank of an exhaust system provided with exhaust gas after-treatment in an internal combustion engine.

### PRIOR ART

As it is known, international directives staging the progressive reduction of the emissions of the polluting gases produced by motor vehicles (the so-called "Euro5" and "Euro6" or "Tier2 Bin5" emission standards) set a very low limit for the quantity of NOₓ molecules that can be released into the atmosphere.

Compliance with these limits is very critical, especially for Diesel engines; for this reason, manufacturers have had the idea of providing the exhaust system of a Diesel engine with a selective catalytic reduction (SCR) system for NOₓ, which is used to convert NOₓ molecules (NO₂ or NO) into water (H₂0) and nitrogen (N₂), which is an inert gas. The reaction of reduction of NOₓ molecules into nitrogen is difficult to be obtained without using an adequate reductant, typically ammonia (NH₃). The reductant must be injected into the exhaust system upstream of the SCR catalytic converter, so as to be mixed with exhaust gases before entering the SCR catalytic converter.

However, storing ammonia in a vehicle is unwise due to evident safety reasons concerning the fact that ammonia is toxic. As a consequence, manufactures suggested storing and injecting a control fluid and, more in detail, a water solution of urea, which, because of the heat of the exhaust gases and partly due to a catalytic effect, decomposes into ammonia.

Therefore, the exhaust system is provided with a control fluid feeding device, which comprises an exhaust pipe, a tank containing the control fluid, and an actuator, in particular an injector, which is designed to inject the control fluid under pressure coming from the tank into the exhaust pipe. The feeding device further comprises a reversible pump, which draws the control fluid from the tank and delivers the control fluid under pressure to the injector.

When a vehicle remains still for a long time at very low temperatures (below a frosting limit value), the control fluid and/or the components of the feeding device can freeze. The freezing of the control fluid and/or of the components of the feeding device prevents the exhaust gases of the internal combustion engine from being correctly subjected to an after-treatment during the first minutes of operation of the vehicle and until the control fluid and/or the components of the feeding device are defrosted; during this amount of time, polluting exhaust gases cannot be prevented from being released into the atmosphere.

In order to prevent the control fluid from freezing inside the components of the feeding device (in particular, inside the injector and/or possible pipes available), control fluid feeding devices currently available in the market are designed so as to implement, every time the vehicle is turned off, a procedure to empty the feeding device itself, also known as purging of the feeding device. The system purging procedure involves ordering the pump to invert the direction of rotation, so as to suck all the control fluid present in the components downstream of the tank and reintroduce it into the tank itself. In this way, when the vehicle is still, all the control fluid is contained in the tank.

In case of a fault of the pump or of an electronic control unit controlling the operation of the feeding device, the purging of the feeding device can be merely partial. Furthermore, even though the feeding device has been completely purged, but the vehicle remains still at very low temperatures (equal to or below the frosting limit value of the control fluid) for a long time, it can happen that, when the vehicle is turned on again, the control fluid drawn from the tank freezes as soon as it comes into contact with the components of the feeding device and, in particular, with the pipes of the SCR system and with the injector.

It is important for the defrosting of the control fluid and/or of the components of the feeding device to take place very quickly, so as to allow the control fluid under pressure to be fed into the exhaust pipe and, as a consequence, adequately treat the exhaust gases, thus ensuring compliance with the international directives concerning the reduction of the emissions of the polluting gases produced by motor vehicles.

These international directives establish a limit amount of time, within which the feeding device used for the water solution of urea must start working, so as to act as a reductant of NOₓ molecules into nitrogen; this limit amount of time is currently equal to 20 minutes starting from when the vehicle is turned on. Therefore, the correct operation of the SCR system for the reduction of pollutant agents must be ensured within 20 minutes from when the vehicle is turned on and in any temperature condition. Such a defrosting system is disclosed for example in DE 102009054735 A1.

### DESCRIPTION OF THE INVENTION

Therefore, the object of the present invention is to provide a method to defrost a control fluid in a tank of an exhaust system provided with exhaust gas after-treatment in an internal combustion engine, which is not affected by the drawbacks of prior art and is easy and cheap to be implemented.

According to the present invention there is provided a method to defrost a control fluid in a tank of an exhaust system provided with exhaust gas after-treatment in an internal combustion engine according to the appended claims.

### BRIEF DESCRIPTION OF THE DRAWINGS

The present invention will now be described with reference to the accompanying drawings, showing a nonlimiting embodiment thereof, wherein:
figure 1 schematically shows an exhaust system of an internal combustion engine provided with exhaust gas after-treatment; and
figure 2 is a schematic view of a detail of a feeding device for an exhaust system of figure 1.

### PREFERRED EMBODIMENTS THE INVENTION

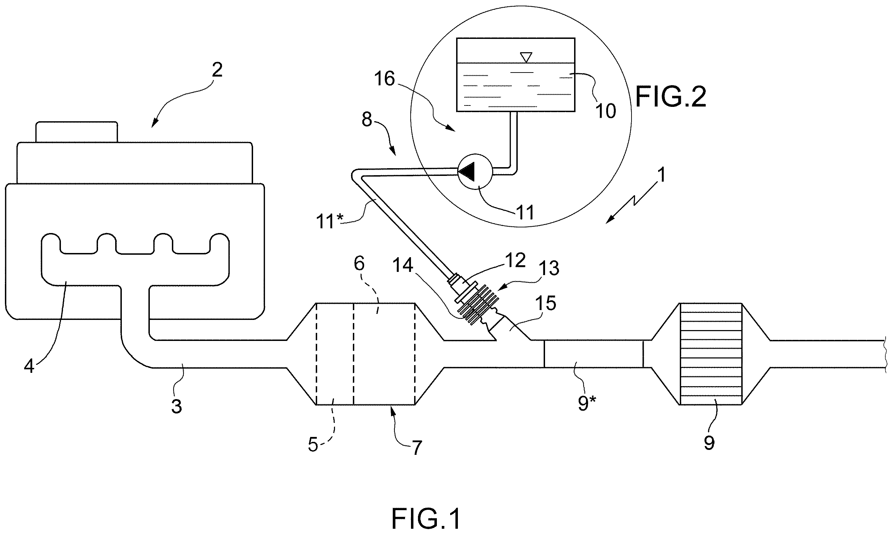

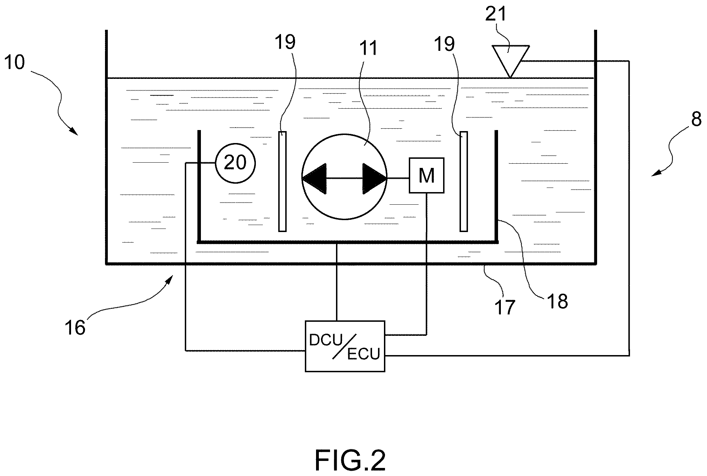

In figure 1, numeral 1 indicates, as a whole, an internal combustion engine comprising an exhaust system 2 to release the gases produced by the combustion into the atmosphere, said exhaust system 2 comprising an exhaust pipe 3 originating from an exhaust manifold 4. A oxidation catalytic converter 5 and a diesel particulate filter 6 are arranged in succession along the exhaust pipe 3. According to a preferred variant, the oxidation catalytic converter 5 and the diesel particulate filter 6 are arranged one after the other on the inside of a common tubular container 7.

The exhaust system 2 is provided with a selective catalytic reduction (SCR) system 8 for the after-treatment of NOx molecules (NO and NO2), which is arranged along the exhaust pipe 3 downstream of the diesel particulate filter 6. In use, because of the heat of the exhaust gases present inside the exhaust pipe 3, the urea injected into the exhaust pipe 3 itself spontaneously decomposes into isocyanic acid (HNCO) and ammonia (NH3), said ammonia operating as a reductant in the SCR system 8 to help the reaction of resolution of NOx molecules into nitrogen (N2) and water (H2O).

According to the variant shown in figure 1, the SCR system 8 comprises one single SCR catalytic converter 9. According to a further variant, which is not shown herein, the SCR system 8 comprises an assembly of (usually three) SCR catalytic converters 9 arranged in series, which, together, optimize the SCR function for the post-treatment of NOx molecules.

According to a preferred variant, along the exhaust pipe 3 and in the area of the SCR system 8, there is inserted a static mixer 9*, which fulfils the function of generating turbulences in the exhaust gases available inside the exhaust pipe 3, so as to prevent the isocyanic acid (which is formed during the decomposition of urea) from locally thickening, thus avoiding the polymerization of the isocyanic acid and increasing the efficiency of the SCR catalytic converter 9 by making the dispersion of ammonia in the exhaust gases more homogeneous. According to the variant shown in figure 1, the static mixer 9* is arranged downstream of the SCR system 8. According to a further variant, which is not shown herein, the static mixer 9* is arranged upstream of the SCR system 8.

The SCR system 8 comprises a tank 10 containing a control fluid, and a pump 11, which draws the control fluid from the tank 10 so as to feed it under pressure to a known electromagnetic injector 12, which is designed to inject the control fluid under pressure into the exhaust pipe 3. The control fluid is a reductant additive and, preferably, it is a water solution of urea, i.e. a solution of urea, synthetic salt and demineralized water, commonly known as "Ad-Blue".

The electromagnetic injector 12 is fixed to the exhaust pipe 3 by means of a connection device 13, which comprises a tubular support body 12, which is made of a heat conductor material (typically steel), houses, on the inside, the electromagnetic injector 12 and, in the area of a lower end of its, is designed to be frontally coupled to a connection pipe 15, which projects out of the exhaust pipe 3 from the side and in an oblique manner.

The SCR system 8 comprises a feeding device 16, which, in turn, comprises the tank 10 containing the water solution of urea and the pump 11, which draws the water solution of urea from the tank 10 so as to feed it under pressure to the electromagnetic injector 12, which, in turn, is designed to inject the pressurized water solution of urea into the exhaust pipe 3.

Therefore, the feeding device 16 comprises the pump 11, which is drowned inside the tank 10 and is fitted into the tank 10 from the bottom, namely through an opening (not shown) made in a lower wall 17 of the tank 10. The pump 11, which draws the water solution of urea from the tank 10, is designed to feed the pressurized water solution of urea to the electromagnetic injector 12 through an outlet pipe 11*.

The feeding device 16 further comprises a heating body 18, which is also drowned inside the tank 10 and is arranged so as to completely surround the pump 11. The heating body 18 is made of a metal material or of a ceramic material or of another heat conductor material and is connected to an electronic control unit ECU. The heating body 18 is electrically connected to a power supply unit and, in use, is controlled by the electronic control unit ECU in such a way that the passage of current produces a uniform heating of the entire heating body 18 and, in this way, helps defrost the water solution of urea interposed between the heating body 18 and the pump 11.

The feeding device 16 further comprises a cartridge filter 19, which is also drowned inside the tank 10 and is arranged so as to completely surround the pump 11.

The pump 11 feeding the water solution of urea to the injector 12 is reversible and is driven by an electric motor M, preferably a brushless DC motor. The pump 11 is designed to invert the direction of rotation, so as to be able to both feed the pressurized water solution of urea to the injector and, when needed, suck the water solution of urea present inside the feeding device 16 downstream of the pump 11 itself (i.e. in the outlet pipe 11* and/or inside the injector 12) during an emptying or purging procedure. In this way, every time the internal combustion engine 1 is turned off, the outlet pipe 11* and the injector 12 can be emptied from the water solution of urea present downstream of the pump 11, so as to prevent the water solution of urea from freezing therein.

The internal combustion engine is further provided with an electronic dosing control unit DCU, which is shown in figure 2 and can approximately coincide with the electronic control unit ECU.

According to a preferred embodiment, the electronic control unit ECU is connected to a temperature sensor 20, so that, every time the internal combustion engine 1 is turned on, the current temperature of the water solution of urea inside the tank 10 is detected (open loop control mode). The electronic control unit ECU is further connected to a level sensor 21, so that, every time the internal combustion engine 1 is turned on, the level of the water solution of urea inside the tank 10 is detected and the level of the water solution of urea inside the tank 10 is compared with a limit value.

According to a possible variant, the current temperature of the water solution of urea inside the tank 10 is determined by the electronic control unit ECI through the power delivered for supplying the heating body 18 (closed loop control mode).

In use, the electronic control unit ECU is designed to order the activation of the heating device 18, so as to enable the defrosting of the water solution of urea between the heating body 18 and the pump 11, based on the current temperature of the water solution of urea inside the tank 10, which is detected by the temperature sensor 20. In case the current temperature of the water solution of urea inside the tank 10 is below or equal to a limit value V_{L}, the electronic control unit ECU is designed to order the activation of the heating device 18, so as to enable the defrosting of the water solution of urea interposed between the pump 11 and the heating body 18.

In case the current temperature of the water solution of urea inside the tank 10 is below or equal to a safety value VS, which is smaller than the limit value VL, the electronic control unit ECU is designed to implement an additional defrosting procedure, which involves controlling the electric motor M so as to generate a thermal power due to Joule effect that is sufficient to defrost the water solution of urea in the neighbourhood of the pump 11 within a predetermined time limit TL. The time limit TL, within which the injector 12 and/or the water solution of urea must defrost, is set by the above-mentioned directives.

The limit value VL is variable as a function of the percentage of urea contained inside the water solution of urea. Experiments has shown that the limit value VL is substantially inversely proportional to the percentage of urea contained inside the water solution of urea up to a minimum value corresponding to a percentage of urea equal to 32.5%. In other words, the freezing of the water solution of urea takes place at temperatures that get lower and lower as the percentage of urea contained inside the water solution of urea increases and they reach the minimum value in correspondence to a percentage of urea equal to 32.5%. For percentages of urea exceeding 32.5%, there is an inversion of the trend, namely the limit value VL is directly proportional to the percentage of urea contained inside the water solution of urea. In other words, with percentages of urea exceeding 32.5%, the freezing of the injector 12 and/or of the water solution of urea takes place at temperatures that get higher and higher as the percentage of urea contained inside the water solution of urea increases. In particular, the water solution of urea with a percentage of urea equal to 32.5% has the minimum limit value VL, which is equal to -11.5 °C. The values of the percentage of urea contained inside the water solution of urea and the corresponding limit values VL are stored in a map of the electronic control unit ECU. The safety value V_{S} is preferably constant and is stored in the electronic control unit ECU.

Based on the result of the comparison between the current temperature of the water solution of urea and the limit value VL and the safety value V_{S}, the following conditions are possible:
- if the current temperature of the water solution of urea exceeds the limit value VL, the electronic control unit ECU is designed not to start any defrosting procedure to defrost the water solution of urea contained inside the tank 10;
- if the current temperature of the water solution of urea is comprised between the limit value VL and the safety value V_{S}, the electronic control unit ECU is designed to activate the heating body 18; and
- if the current temperature of the water solution of urea is below the safety value V_{S}, the electronic control unit ECU is designed both to activate the heating body 18 and to control the electric motor M so as to help defrost the water solution of urea close to the pump 11.

Below you can find a description of the defrosting procedure implemented by the electronic control unit ECU, which substantially involves controlling the electric motor M in a non-efficient manner, so as to generate, due to Joule effect, a thermal power that is sufficient to defrost the water solution of urea close to the pump 11 within the time limit TL.

The electric motor M comprises a rotor and a stator comprising at least three stator windings, where the current can flow according to a given sequence so as to cause the rotor to rotate; as it is known, the rotor is caused to rotate by the sequential switching and according to a timing defined by the stator windings located in the stator. The electric motor M can alternatively be both an inner motor and an outer motor. The defrosting procedure implemented by the electronic control unit ECU involves supplying a current through the stator windings varying the sequence of the stator windings and/or the timing/frequency.

The stator of the electric motor M comprises at least three stator windings, so as to have at least three phases which can be assembled in a star- or triangle-like configuration. Experiments have shown that good results can be obtained with an electric motor M provided with a stator comprising six stator windings uniformly arranged around the rotor; in other words, experiments have shown that good results can be obtained with an electric motor M in which the stator windings are arranged in a uniform manner around the rotor in the order A, B, C, A, B, C.

The defrosting procedure implemented by the electronic control unit ECU involves supplying a current through the stator windings according to a sequence that is such as to generate a rotation torque of the shaft of the pump 11. Clearly, the shaft of the pump 11 is not free to rotate because of the freezing of the water solution of urea; in this way, the energy supplied by the electric motor M generates a thermal power due to Joule effect that helps defrost the water solution of urea close to the pump 11.

For example, according to a possible embodiment, the defrosting procedure implemented by the electronic control unit ECU involves supplying the stator windings with a substantially constant electric voltage V and supplying a current through the stator windings according, for example, to a sequence A C B A C B. This operating sequence of the stator windings permits to continuously invert the direction of rotation of the pump 11 and to generate a punctual rotation torque, which does not actually allow the shaft of the pump 11 to rotate, but enables the generation of a thermal power due to Joule effect, which helps defrost the water solution of urea close to the pump 11.

According to a further embodiment, the defrosting procedure implemented by the electronic control unit ECU involves supplying the stator windings with a substantially constant electric voltage V, but with a variable control frequency and/or supplying a variable power supply current. In this case, the thermal power generated through Joule effect is variable as a function of the control frequency and/or of the power supply current of the stator windings.

According to a further embodiment, the defrosting procedure implemented by the electronic control unit ECU involves supplying the stator windings with a substantially constant electric voltage V, but with a variable control frequency and/or supplying a variable power supply current as well as varying the sequence of the stator windings supplied with power, for example according to a sequence A C B A C B.

It should be pointed out that the defrosting procedure implemented by the electronic control unit ECU does not involve a pre-heating of the pump 11; in other words, the defrosting procedure implemented by the electronic control unit ECU does not involve supplying at least one of the stator windings with a current that is such as to allow the pump 11 to be pre-heated but is not sufficient enough to cause the rotation of the shaft of the pump 11, thus generating a thermal power due to Joule effect that helps defrost the water solution of urea close to the pump 11.

The method described above has some advantages. First of all, it is simple and cheap to the implemented and it does not involve an excessive computing burden for the electronic control unit ECU.

Furthermore, experiments have shown that it enables a remarkable increase in the capacity of defrosting the water solution of urea close to the pump 11, so as to make said water solution of urea available to the SCR system 8 for a reliable reduction of the pollutants within the time limit established by the enforced international directives concerning this matter.

## Claims

1. A method to defrost a control fluid, in particular a water solution of urea, in a tank (10) of an exhaust system (2) provided with exhaust gas after-treatment in an internal combustion engine (1) comprising a reversible pumping device (11), which is drowned inside the tank (10) and draws a control fluid from the tank (10) to feed a pressurized control fluid to an electromagnetic injector (12), which is designed to inject the pressurized control fluid into an exhaust pipe (3); wherein, the reversible pumping device (11) is driven by an electric motor (M), preferably a brushless DC motor (M); the method comprises the steps of detecting the current temperature of the control fluid inside the tank (10); comparing the current temperature of the control fluid with a safety value (V_{S}) indicating the frosting of the control fluid contained inside the tank (10); and controlling the electric motor (M) in a non-efficient manner, so as to generate a thermal power due to Joule effect that helps defrosting the control fluid close to the pumping device (11), in case the current temperature of the control fluid is below the safety value (V_{S}).

2. A method according to claim 1 and comprising the further step of supplying the electric motor (M) with a substantially constant electric voltage (V) and of supplying a current to the stator windings of the electric motor (M) with a sequence that is such as to continuously invert the direction of rotation of the pumping device (11).

3. A method according to claim 1 or 2 and comprising the further step of supplying the electric motor (M) with a substantially constant electric voltage (V) and of supplying power to the electric motor (M) at a variable control frequency and/or of supplying the electric motor (M) with a variable supply current.

4. A method according to any of the previous claims, wherein the exhaust system (2) provided with exhaust gas after-treatment comprises a heating device (18), which is drowned inside the tank (10), is arranged so as to completely surround the pumping device (11), and is made of a metal material or of another heat conductor material; the method comprises the steps of recognizing the condition in which the current temperature of the control fluid is below a limit value (V_{L}) indicating the frosting of the control fluid contained inside the tank (10) and exceeds the safety value (Vs); and ordering the activation of the heating device (18) in case the current temperature of the control fluid is below the limit value (V_{L}) in order to help defrosting the control fluid interposed between the heating device (18) and the pumping device (11).

5. A method according to claim 4, wherein the limit value (V_{L}) is variable as a function of the control fluid used.

6. A method according to any of the previous claims, wherein the control fluid is a water solution of urea, in particular a 32.5% solution of urea in demineralized water.

7. A method according to claim 5 or 6, wherein the limit value (V_{L}) is variable as a function of the percentage of urea contained inside the water solution of urea.

8. A method according to any of the previous claims, wherein the tank (10) is provided with an temperature sensor (20) to detect the current temperature of the control fluid contained therein.

9. A method according to any of the claims from 1 to 3, wherein the exhaust system (2) provided with exhaust gas after-treatment comprises a heating device (18), which is drowned inside the tank (10), is arranged so as to completely surround the pumping device (11), and is made of a metal material or of another heat conductor material; the method comprises the step of ordering the activation of the heating device (18) and determining the current temperature of the control fluid contained in the tank (10) as a function of the power delivered to supply the heating device (18).

## Patentansprüche

1. Verfahren zum Auftauen einer Reaktionsflüssigkeit, insbesondere einer wässrigen Harnstofflösung in einem Tank (10) eines mit einer Abgasnachbehandlung versehenen Abgassystems (2) in einem Verbrennungsmotor (1), enthaltend eine umkehrbare Pumpeinrichtung (11), die im Inneren des Tanks (10) eingetaucht ist und eine Reaktionsflüssigkeit aus dem Tank (10) saugt, um eine druckbeaufschlagte Reaktionsflüssigkeit einem elektromagnetischen Einspritzventil (12) zuzuführen, welches dafür konstruiert ist, die druckbeaufschlagte Reaktionsflüssigkeit in ein Auspuffrohr (3) einzuspritzen; wobei die umkehrbare Pumpeinrichtung (11) durch einen Elektromotor (M), vorzugsweise einen bürstenlosen Gleichstrommotor (M) angetrieben wird; welches Verfahren die Schritte des Erfassens der aktuellen Temperatur der Reaktionsflüssigkeit innerhalb des Tanks (10); des Vergleichens der gegenwärtigen Temperatur der Reaktionsflüssigkeit mit einem Sicherheitswert (Vs), der das Gefrieren der in dem Tank (10) enthaltenen Reaktionsflüssigkeit anzeigt; und des Steuerns des Elektromotors (M) in einer ineffizienten Weise enthält, um so bedingt durch den Joule-Effekt eine Wärmeleistung zu erzeugen, die das Auftauen der Reaktionsflüssigkeit nahe an der Pumpeinrichtung (11) unterstützt, falls die gegenwärtige Temperatur der Reaktionsflüssigkeit unter dem Sicherheitswert (V_{S}) liegt.

2. Verfahren nach Anspruch 1, enthaltend den weiteren Schritt des Versorgens des Elektromotors (M) mit einer im Wesentlichen konstanten elektrischen Spannung (V) und des Zuführens eines Stroms zu den Statorwicklungen des Elektromotors (M) mit einer solchen Sequenz, dass die Drehrichtung der Pumpeinrichtung (11) kontinuierlich umgekehrt wird.

3. Verfahren nach Anspruch 1 oder 2, enthaltend den weiteren Schritt des Versorgens des Elektromotors (M) mit einer im Wesentlichen konstanten elektrischen Spannung (V) und des Zuführens von Leistung zu dem Elektromotor (M) mit einer veränderlichen Steuerfrequenz und/oder des Versorgens des Elektromotors (M) mit einem veränderlichen Versorgungsstrom.

4. Verfahren nach einem der vorhergehenden Ansprüche, wobei das mit einer Abgasnachbehandlung versehene Abgassystem (2) eine Heizeinrichtung (18) aufweist, die innerhalb des Tanks (10) eingetaucht ist, so angeordnet ist, dass sie die Pumpeinrichtung (11) vollständig umgibt und aus einem Metallmaterial oder einem anderen wärmeleitenden Material hergestellt ist; welches Verfahren die Schritte des Erkennens des Zustands, in welchem die gegenwärtige Temperatur der Reaktionsflüssigkeit unter einem Grenzwert (V_{L}) ist, der das Gefrieren der in dem Tank (10) enthaltenen Reaktionsflüssigkeit anzeigt und den Sicherheitswert (V_{S}) übersteigt; und des Anweisens der Aktivierung der Heizeinrichtung (18) in dem Fall, dass die gegenwärtige Temperatur der Reaktionsflüssigkeit unter dem Grenzwert (V_{L}) liegt, um das Auftauen der zwischen der Heizeinrichtung (18) und der Pumpeinrichtung (11) befindlichen Reaktionsflüssigkeit zu unterstützen.

5. Verfahren nach Anspruch 4, wobei der Grenzwert (V_{L}) als Funktion der verwendeten Reaktionsflüssigkeit veränderlich ist.

6. Verfahren nach einem der vorhergehenden Ansprüche, wobei die Reaktionsflüssigkeit eine wässrige Harnstofflösung ist, insbesondere eine 32,5%-Lösung von Harnstoff in entmineralisiertem Wasser.

7. Verfahren nach Anspruch 5 oder 6, wobei der Grenzwert (V_{L}) als Funktion des in der wässrigen Harnstofflösung enthaltenen Prozentsatzes von Harnstoff veränderlich ist.

8. Verfahren nach einem der vorhergehenden Ansprüche, wobei der Tank (10) mit einem Temperatursensor (20) versehen ist, um die gegenwärtige Temperatur der darin enthaltenen Reaktionsflüssigkeit zu erfassen.

9. Verfahren nach einem der Ansprüche von 1 bis 3, wobei das mit der Abgasnachbehandlung versehene Abgassystem (2) eine Heizeinrichtung (18) aufweist, die in dem Tank (10) eingetaucht ist, die so angeordnet ist, dass sie die Pumpeinrichtung (11) vollständig umgibt und aus einem Metallmaterial oder einem anderen wärmeleitenden Material hergestellt ist; welches Verfahren den Schritt des Anweisens der Aktivierung der Heizeinrichtung (18) und des Bestimmens der gegenwärtigen Temperatur der in dem Tank (10) enthaltenen Reaktionsflüssigkeit als eine Funktion der zur Versorgung der Heizeinrichtung (18) gelieferten Leistung enthält.

## Revendications

1. Méthode pour le dégivrage d'un fluide de commande, en particulier d'une solution aqueuse d'urée, dans un réservoir (10) d'un système d'échappement (2) doté d'un traitement ultérieur des gaz d'échappement dans un moteur à combustion interne (1) comprenant un dispositif de pompage réversible (11), qui est noyé dans le réservoir (10) et soutire un fluide de commande du réservoir (10) pour fournir un fluide de commande pressurisé à un injecteur électromagnétique (12), qui est conçu pour injecter le fluide de commande pressurisé dans un tuyau d'échappement (3) ; dans laquelle le dispositif de pompage réversible (11) est entraîné par un moteur électrique (M), de préférence un moteur à courant continu sans balais (M) ; la méthode comprend les étapes de détection de la température actuelle du fluide de commande dans le réservoir (10) ; comparaison de la température actuelle du fluide de commande avec une valeur de sécurité (V_{S}) indiquant le dégivrage du fluide de commande contenu dans le réservoir (10) ; et commande du moteur électrique (M) d'une manière non efficiente, de sorte à générer une puissance thermique due à l'effet Joule qui aide à dégivrer le fluide de commande proche du dispositif de pompage (11) au cas où la température actuelle du fluide de commande est inférieure à la valeur de sécurité (Vs).

2. Méthode selon la revendication 1 et comprenant l'étape d'alimentation supplémentaire du moteur électrique (M) en une tension électrique (V) sensiblement constante et d'alimentation d'un courant vers les enroulements de stator du moteur électrique (M) en une séquence qui est de sorte à inverser en continu la direction de rotation du dispositif de pompage (11).

3. Méthode selon la revendication 1 ou 2 et comprenant l'étape d'alimentation supplémentaire du moteur électrique (M) en une tension électrique (V) sensiblement constante et d'alimentation de puissance au moteur électrique (M) à une fréquence de commande variable et/ou d'alimentation du moteur électrique (M) en un courant d'alimentation variable.

4. Méthode selon l'une quelconque des revendications précédentes, dans laquelle le système d'échappement (2) doté d'un traitement ultérieur des gaz d'échappement comprend un dispositif de chauffage (18), qui est noyé dans le réservoir (10), est agencé de sorte à entourer complètement le dispositif de pompage (11), et est réalisé en un matériau métallique ou en un autre matériau thermoconducteur ; la méthode comprend les étapes de reconnaissance de l'état dans lequel la température actuelle du fluide de commande est inférieure à une valeur limite (V_{L}) indiquant le givrage du fluide de commande contenu dans le réservoir (10) et excède la valeur de sécurité (V_{S}) ; et commande l'activation du dispositif de chauffage (18) au cas où la température actuelle du fluide de commande est inférieure à la valeur limite (V_{L}) afin d'aider au dégivrage du fluide de commande interposé entre le dispositif de chauffage (18) et le dispositif de pompage (11).

5. Méthode selon la revendication 4, dans laquelle la valeur limite (V_{L}) est variable en fonction du fluide de commande utilisé.

6. Méthode selon l'une quelconque des revendications précédentes, dans laquelle le fluide de commande est une solution aqueuse d'urée, en particulier une solution de 32,5 % d'urée dans de l'eau déminéralisée.

7. Méthode selon la revendication 5 ou 6, dans laquelle la valeur limite (V_{L}) est variable en fonction du pourcentage d'urée contenue dans la solution aqueuse d'urée.

8. Méthode selon l'une quelconque des revendications précédentes, dans laquelle le réservoir (10) est doté d'un capteur de température (20) pour détecter la température actuelle du fluide de commande contenu dans celui-ci.

9. Méthode selon l'une quelconque des revendications 1 à 3, dans laquelle le système d'échappement (2) doté d'un traitement ultérieur des gaz d'échappement comprend un dispositif de chauffage (18), qui est noyé dans le réservoir (10), est agencé de sorte à entourer complètement le dispositif de pompage (11), et est réalisé en un matériau métallique ou en un autre matériau thermoconducteur ; la méthode comprend l'étape de commande de l'activation du dispositif de chauffage (18) et de détermination de la température actuelle du fluide de commande contenu dans le réservoir (10) en fonction de la puissance fournie pour alimenter le dispositif de chauffage (18).
